# FASCICULE DE BREVET EUROPEEN

(11) **EP 0 354 146 B1**
(45) Date de publication et mention de la délivrance du brevet: **10.03.1993**
(21) Numéro de dépôt: 89420292.8
(22) Date de dépôt: 01.08.1989
(51) Int. Cl.: C08G 77/38

(54) **Diorganopolysiloxane à fonction dibenzoylmethane**
Dibenzoylmethangruppenhaltiges Diorganopolysiloxan
Dibenzoylmethane group-containing diorganopolysiloxane

(30) Priorité: 04.08.1988 FR 8810778
(43) Date de publication de la demande: 07.02.1990
(73) Titulaire: RHONE-POULENC CHIMIE, 92408 Courbevoie Cédex (FR)
(72) Inventeur: Canivenc, Edith, F-69007 Lyon (FR); Forestier, Serge, F-77410 Claye Souilly (FR); Gay, Michel, F-69006 Lyon (FR); Lang, Gérard, F-95210 Saint-Gratien (FR); Richard, Hervé, F-75020 Paris (FR)
(74) Mandataire: Fabre, Madeleine-France

(56) Documents cités:
- EP-A- 0 088 842
- EP-A- 0 088 842
- EP-A- 0 202 542
- EP-A- 0 263 038
- FR-A- 2 513 992
- DIE MAKROMOLEKULARE CHEMIE, vol. 7, no. 6, juin 1986, pages 381-388, Basel, CH ; S. BERG et al.:"Structural variations of liquid-crystalline polymers : Cross-shaped and lateraly linked mesogens in main chain and side group polymers"

## Description

La présente invention concerne un diorganopolysiloxane à fonction dibenzoylméthane. Elle est le fruit d'une coopération entre les Sociétés l'OREAL et RHONE-POULENC CHIMIE.

Il est déjà connu de modifier, dans la chaîne et/ou en bout de chaîne, par des groupements organiques fonctionnels divers, des diorganopolysiloxanes dans le but de conférer à ces polymères silicones, des propriétés spécifiques.

Un moyen commode d'introduire ces groupements organiques fonctionnels est d'effectuer une réaction d'hydrosilylation en présence d'une quantité catalytiquement efficace d'un catalyseur au platine d'un diorganopolysiloxane porteur d'au moins un groupement SiH sur un composé organique porteur d'une insaturation alcénique.

Comme documents illustrant cet art antérieur on peut par exemple citer :
- les brevets US-A-2 970 150 et US-A-4 160 775 décrivant l'addition d'alcool allylique ou méthallylique sur silane ou diorganopolysiloxane porteur d'au moins un groupement SiH,
- les brevets US-A-3 767 690 et US-A4 503 208 décrivant des diorganopolysiloxanes porteurs de groupes à fonction acrylate ou méthacrylate,
- le brevet US-A-4640 967 décrivant des diorganopolysiloxanes porteurs de groupement époxy et/ou acrylate ou méthacrylate et leur réalisation comme composition de revêtement de fibres optiques,
- le brevet EP-A-0 088 842 décrivant des diorganopolysiloxanes porteurs de groupements benzophènone.

La présente invention a précisément pour objet de proposer de nouveaux diorganopolysiloxanes modifiés par des groupements organiques fonctionnels qui présentent d'une part un indice de réfraction élevé en vue de leur incorporation dans des compositions de revêtement pour fibres optiques et, d'autre part, conviennent comme lubrifiant des matières plastiques en particulier du PVC.

Elle concerne en effet un polymère diorganopolysiloxane modifié choisi parmi ceux de formule : 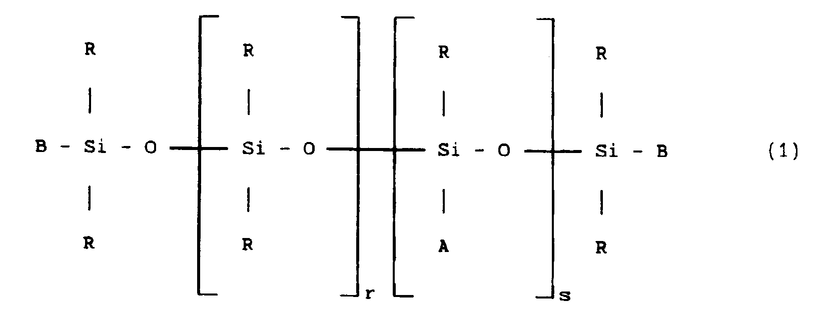
dans laquelle les symboles :
- R, identiques ou différents, sont choisis parmi les radicaux alkyle en C₁-C₁₀, vinyle, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est O, au moins un des deux symboles B est A,
et de formule : 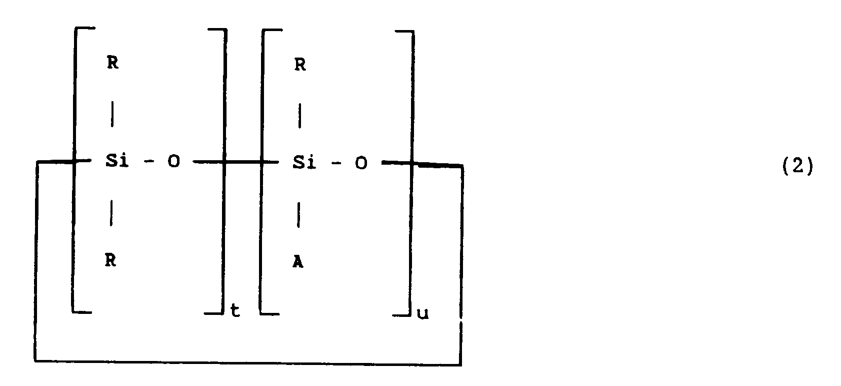
dans laquelle :
- R a la même signification qu'à la formule (1),
- u est un nombre entier compris entre 1 et 20 et
- t est un nombre entier compris entre 0 et 20 inclus,
- t + u est égal ou supérieur à 3.

Formules dans lesquelles le symbole A est un radical de formule : 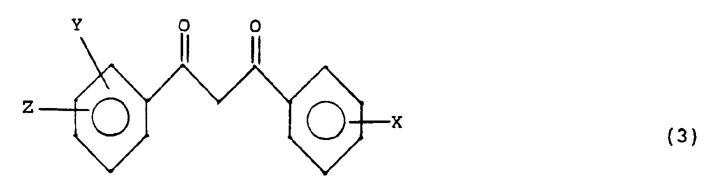 dans laquelle :
- X est choisi parmi un atome d'hydrogène, un radical alkyle linéaire ou ramifié en C₁-C₈, un radical alcoxy linéaire ou ramifié en C₁-C₈,
- Y est choisi parmi un atome d'hydrogène, un groupe hydroxyle et un radical alcoxy en C₁-C₄,
- Z est un reste divalent de formule : 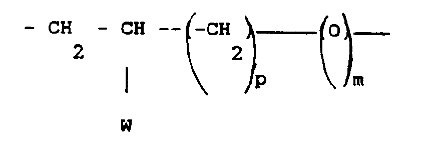 dans lequel m est 0 ou 1, p est un nombre entier compris entre 1 et 10 inclusivement et W est choisi parmi un atome d'hydrogène et un radical alkyle en C₁-C₄, sous réserve que, lorsque m est égal à 0, Y représente un radical alcoxy ou OH et est situé en position ortho par rapport à Z.

On préfère plus particulièrement les polymères statistiques ou à blocs de formules (1) et (2) présentant au moins l'une des caractéristiques suivantes :
- R est méthyle,
- B est méthyle,
- r est compris entre 5 et 20 inclus,
- s est compris entre 2 et 15 inclus,
- t + u est compris entre 3 et 10 inclus,
- X est H ou methoxy, de préférence H
- Y est H, OH ou méthoxy,
- Z est un reste divalent dans lequel m = 0 ou 1, p = 1, W = H ou méthyle.

Pour préparer les polymères de formules (1) et (2), on peut par exemple partir du polymère correspondant dans lequel tous les radicaux A sont des atomes d'hydrogène.

Ce polymère est dénommé par la suite polymère à SiH ; les groupes SiH peuvent être présents dans la chaîne et/ou aux extrémités de chaîne. Ces polymères à SiH sont des produits bien connus dans l'industrie des silicones et sont généralement disponibles dans le commerce.

Ils sont par exemple décrits dans les brevets américains US-A-3 220 972, US-A-3 436 366, US-A-3 697 473 et US-A-4 340 709.

Ce polymère à SiH peut donc être représenté par la formule ; 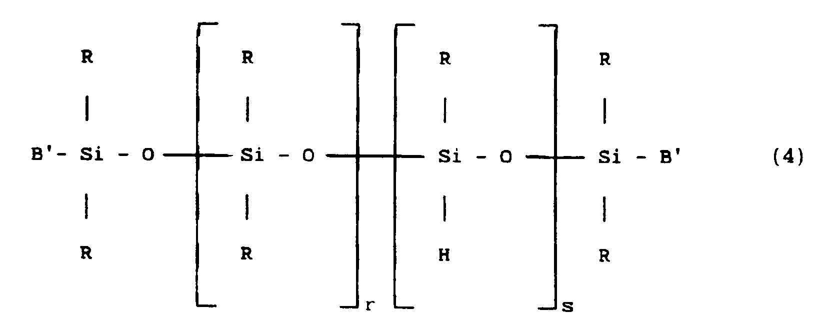 dans laquelle R, r et s ont la signification donnée ci-dessus pour la formule (1) et les radicaux B′, identiques ou différents, sont choisis parmi les radicaux R et un atome d'hydrogène,
et par la formule : 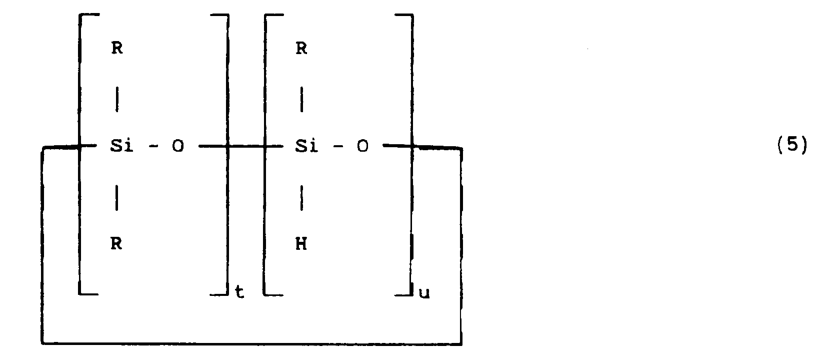
dans laquelle R, t et u ont la signification donnée ci-dessus pour la formule (2).

Sur ce polymère à SiH de formules (4) ou (5), on effectue une réaction d'hydrosilylation en présence d'une quantité catalytiquement efficace d'un catalyseur au platine sur un dérivé organique de dibenzoylméthane choisi parmi ceux de formule : 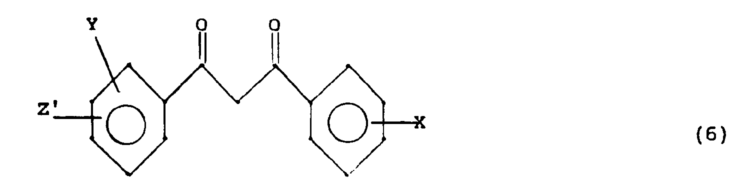
dans laquelle X et Y ont la signification donnée ci-dessus à la formule (3) et Z′ représente le radical : 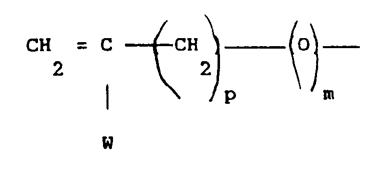
dans lequel p, m et W ont la signification donnée à la formule (3) ci-dessus, sous réserve que lorsque m est égal à 0, Y représente un radical OH ou alcoxy et est situé en position ortho par rapport à Z′.

Les produits de formule (6) sont, pour la plupart, des produits connus. Ils peuvent être synthétisés notamment suivant les modes opératoires décrits dans les publications référencées dans les résumés des CHEMICAL ABSTRACTS suivants ; Vol. 58 11316e, Vol. 93 8051h, Vol. 101 191 435g et Vol. 94 208 660p, ainsi que dans les brevets FR-A-2 506 156, FR-A-2 513 992 et FR-A-2 526 658.

Un procédé convenable pour m = 0 est le suivant :
Au cours d'une première étape a) on fait réagir de l'acétophénone hydroxylé en position 2, 3 ou 4 sur un halogènure d'alcényle de formule : 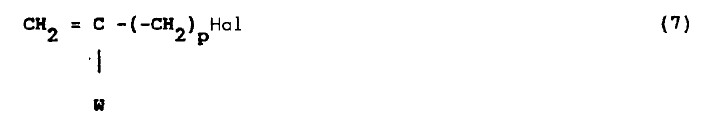
dans laquelle W et p ont la signification donnée ci-desus à la formule (6) et Hal représente un atone d'halogène, de préférence le chlore ou le brome, en présence d'une base par exemple en présence d'un hydroxyde ou carbonate de métal alcalin ou alcalino-terreux ou d'un amidure, alcoolate ou hydrure alcalin, dans un solvant compatible avec la nature de la base tel que l'eau ou un solvant organique tel qu'un alcool, le dioxanne, le diméthylsulfoxyde ou le diméthylformamide, à une température comprise entre la température ambiante et le point d'ébullition du solvant, pour obtenir un produit de formule :

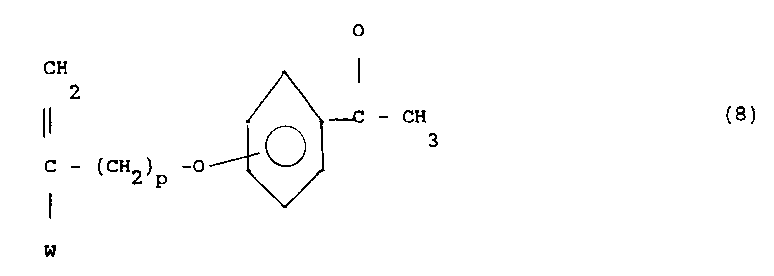

Au cours d'une deuxième étape b) on effectue un réarrangement de CLAISEN décrit par TARBELL (Organic Reactions, Vol. 2, John WILEY, New-York, 1944, page 1) par chauffage à au moins 170 °C du composé de formule (8) en présence éventuellement d'un solvant pour obtenir le produit de formule :

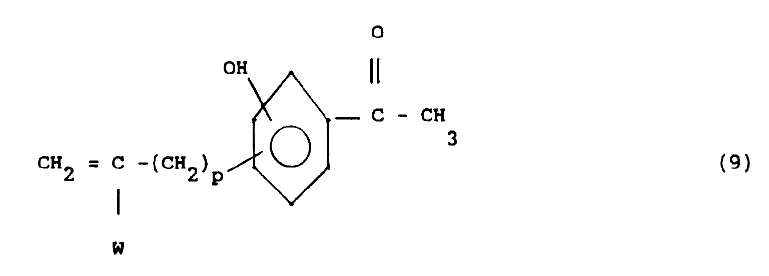

Au cours d'une troisième étape c) on condense dans la pyridine le produit de formule (9) sur le chlorure de benzoyle de formule : 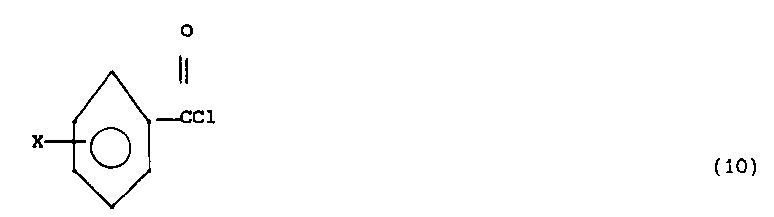
pour obtenir un produit de formule : 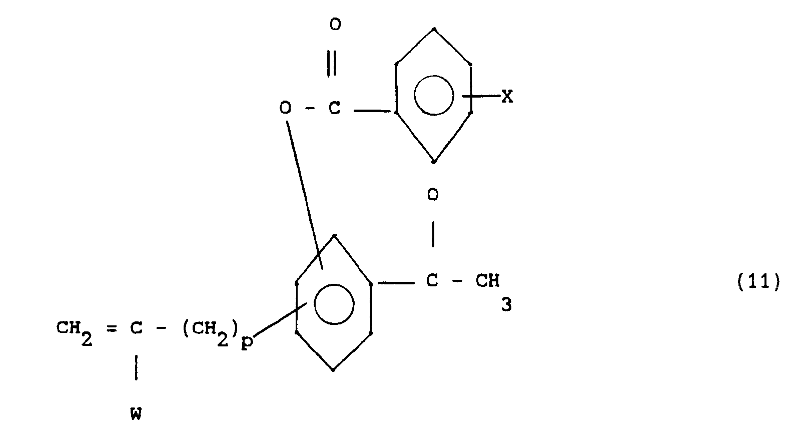
et on obtient finalement le produit de formule (6) avec m = 0 en effectuant au cours d'une quatrième étape d), en présence de potasse et dans la pyridine un réarrangement de BAKER VENKATARAMAN sur le produit de formule (11).

Les composés de formule (6) dans laquelle m = 0 ou 1 et Y est différent de OH sont obtenus par condensation d'un ester de formule (12) sur une acétophénone de formule (13).

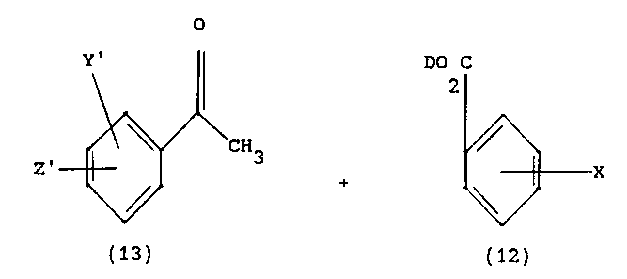

Dans le composé de formule (12), X a la signification donnée ci-dessus à la formule (3) et D représente un reste alkyle en C₁-C₆. Dans le composé de formule (13), Z′ a la signification donnée ci-dessus à la formule (6) et Y′ représente un atome d'hydrogène, ou un radical alcoxy en C₁-C₄. La réaction est effectuée en présence d'une base, par exemple en présence d'un alcoolate, hydrure ou amidure alcalin, dans un solvant compatible avec la nature de la base tel que le toluène, l'éther isopropylique, le dioxanne, le tétrahydrofuranne, le diméthoxy-1,2 éthane, le diméthylsulfoxyde ou le diméthylformamide, à une température comprise entre la température ambiante et le point d'ébullition du solvant.

L'acétophénone de formule (13) peut être préparée selon des méthodes connues.

Par exemple :
- lorsque m = 1 et Y′ = H, l'acétophénone est obtenue selon le mode opératoire décrit ci-dessus pour la préparation du composé (8),
- lorsque m = 0 et Y′ = alcoxy en C₁-C₄, l'acétophénone est obtenue par alkylation du composé de formule (9) au moyen d'un halogénure ou d'un sulfate d'alkyle en C₁-C₄ selon le mode opératoire décrit à l'étape a) ci-dessus.

Les catalyseurs au platine utilisés pour réaliser la réaction d'hydrosilylation des polymères de formules (4) et (5) sur le dérivé organique de formule (6) sont amplement décrits dans la littérature, on peut en particulier citer les complexes du platine et d'un produit organique décrit dans les brevets américains US-A- 3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 337 432 et US-A-3 814 730.

Pour faire réagir le polymère à SiH de formules (4) ou (5) sur le dérivé de formule (6) on utilise généralement une quantité de catalyseur au platine calculée en poids de platine métal comprise entre 5 et 600 ppm, de préférence entre 10 et 200 ppm basés sur le poids de polymère à SiH de formules (4) ou (5).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température comprise entre 60 à 120 °C pendant le temps nécessaire pour que la réaction soit complète. Par ailleurs on peut ajouter goutte à goutte le polymère à SiH sur le dérivé de formula (6) en solution dans un solvent organique ou bien ajouter simultanément le polymère à SiH et le dérivé de formula (6) à une suspension de catalyseur dans le solvant.

On vérifie que la réaction est complète en dosant les SiH résiduels par la potasse alcoolique puis on élimine le solvant par exemple par distillation sous pression réduite.

L'huile brute obtenue peut être purifée, par exemple par passage sur une colonne absorbante de silice.

Les polymères de formules (1) ou (2) présentent un indice de réfraction remarquablement élevé. Ils sont donc utilisables en particulier en mélange avec les compositions organiques ou organosiliciques utilisées pour enrober les fibres optiques, dans le cas où on recherche à obtenir un revêtement à indice élevé.

Par ailleurs les polymères de formules (1) ou (2) sont de remarquables lubrifiants de diverses matières plastiques telles que : polyoléfines, polyesters et surtout PVC (polychlorure de vinyle) et permettent d'éviter le collage sur les outils et machines de mise en oeuvre de ces matières plastiques.

Pour cette dernière application on incorpore de 0,001 à 3 parties en poids de polymère pour 100 parties en poids de matière plastique avant sa mise en oeuvre.

Les exemples suivants illustrent l'invention.

### - EXEMPLE 1 :

Préparation du polymère statistique de formule : 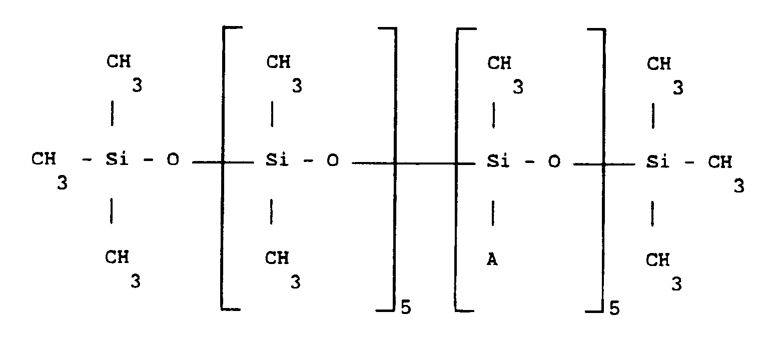
dans laquelle A est le reste de formule :

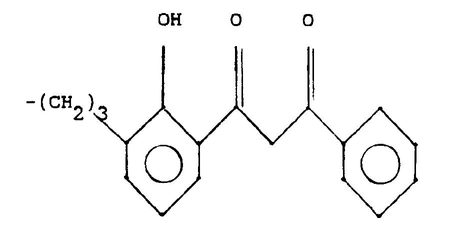

A une suspension de platine sur charbon à 5 % (70 mg) dans du toluène sec (5 ml) à 90-100 °C, sous azote et sous agitation, on ajoute goutte à goutte en une heure trente minutes, une solution toluènique (40 ml) d'allyl-3 hydroxy-2 dibenzoylméthane (12,6 g, 45 meq) et 5,12 g de polyméthylhydrogénodiméthylsiloxane de formule ci-dessus où A est un atome d'hydrogène.

Tout en maintenant la température entre 100 et 105 °C on laisse sous agitation et au reflux jusqu'à disparition des groupements SiH (absence de bande à 2180 cm⁻¹ en infra-rouge), soit 10 heures. On filtre sur papier, élimine le solvant et lave trois fois à l'éthanol à 80 %. L'huile obtenue est reprise dans le chloroforme, séchée sur sulfate de sodium et filtrée sur célite pour éliminer les restes de platine colloïdal. On obtient après évaporation du solvant une huile épaisse jaune orange (poids : 9,3 g, rendement : 68 %).
Spectre UV (CHCl₃),
λ max = 346 nm,
λ max = 365 nm,
L'analyse par résonance magnétique nucléaire (¹H et ²⁹Si RMN) indique que ce produit est bien le polymère de formule ci-dessus.

### - EXEMPLE 2 :

Préparation d'un polymère statistique de même formule qu'à l'exemple 1 sauf que A est un reste de formule : 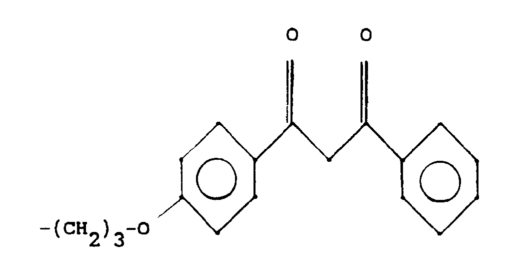
Même mode opératoire que l'exemple 1 avec l'allyloxy-4 dibenzoylméthane (10 g, 36 meq) et 5,8 g de polyméthylhydrogénodiméthylsiloxane. On obtient une huile épaisse jaune pâle (poids : 15 g, rendement : 95 %).
Spectre UV (CHCl₃) :
λ max : 353 nm.

L'analyse par résonance magnétique nucléaire (1_{H} et ²⁹Si RMN) indique que ce produit est bien un polymère de formule ci-dessus.

## Revendications (Revendications pour l'(les) Etat(s) contractant(s) suivant(s): AT, BE, CH, DE, FR, GB, GR, IT, LI, LU, NL, SE)

1. Polymère diorganopolysiloxane modifié choisi parmi ceux de formule : 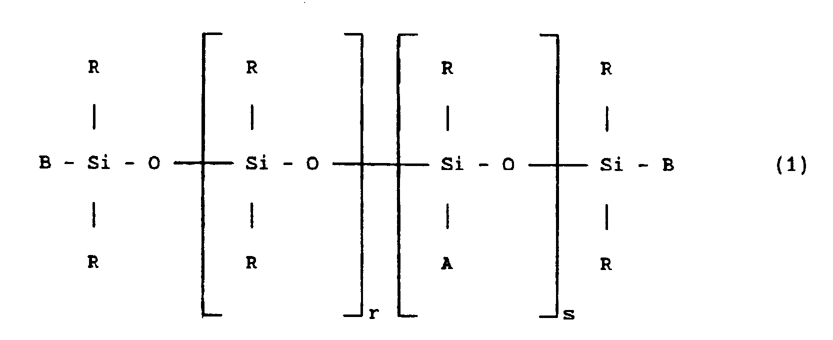 dans laquelle les symboles :
- R, identiques ou différents, sont choisis parmi les radicaux alkyle en C₁-C₁₀, vinyle, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est O, au moins un des deux symboles B est A,
et de formule : 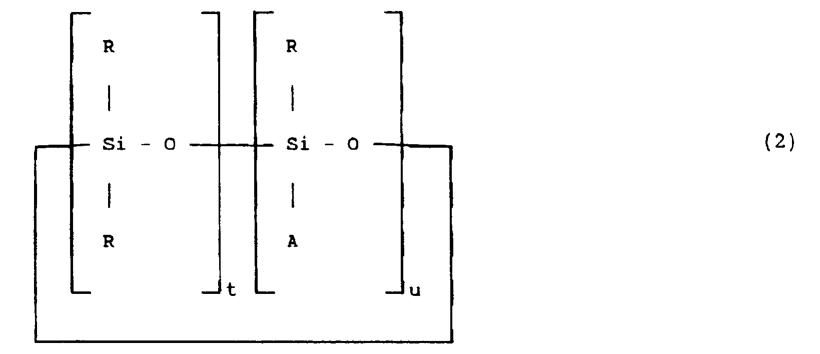 dans laquelle :
- R a la même signification qu'à la formule (1),
- u est un nombre entier compris entre 1 et 20 et
- t est un nombre entier compris entre 0 et 20 inclus,
- t + u est égal ou supérieur à 3,
formules dans lesquelles le symbole A est un radical de formule : 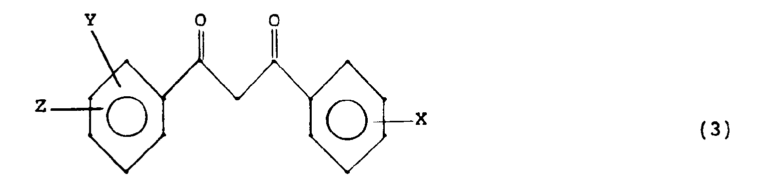 dans laquelle :
- X est choisi parmi un atome d'hydrogène, un radical alkyle linéaire ou ramifié en C₁-C₈, un radical alcoxy linéaire ou ramifié en C₁-C₈,
- Y est choisi parmi un atome d'hydrogène, un groupe hydroxyle et un radical alcoxy en C₁-C₄,
- Z est un reste divalent de formule : 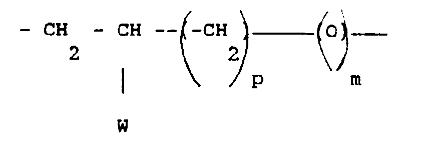 dans lequel m est 0 ou 1, p est un nombre entier compris entre 1 et 10 inclusivement et W est choisi parmi un atome d'hydrogène et un radical alkyle en C₁-C₄, sous réserve que, lorsque m est égal à 0, Y représente un radical alcoxy ou OH et est situé en position ortho par rapport à Z.

2. Polymère selon la revendication 1, caractérisé en ce que :
- R est méthyle,
- B est méthyle
- r est compris entre 5 et 20 inclus,
- s est compris entre 2 et 15 inclus,
- t + u est compris entre 3 et 10 inlcus,
- X est H ou méthoxy,
- Y est H, OH ou méthoxy,
- Z est un reste divalent dans lequel m = 0 ou 1, p = 1, W = H ou méthyle.

3. Procédé de préparation d'un polymère tel que défini à la revendication 1 ou 2, caractérisé en ce qu'on effectue une réaction d'hydrosilylation en présence d'une quantité catalytiquement efficace d'un catalyseur au platine, d'un polymère à SiH de formule : 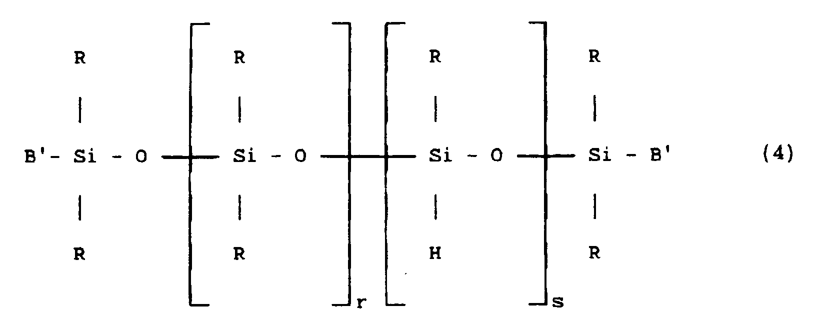 dans laquelle R, r et s ont la signification donnée dans la revendication 1 ou 2
et les radicaux B′, identiques ou différents, sont choisis parmi les radicaux R et un atome d'hydrogène,
et par la formule : 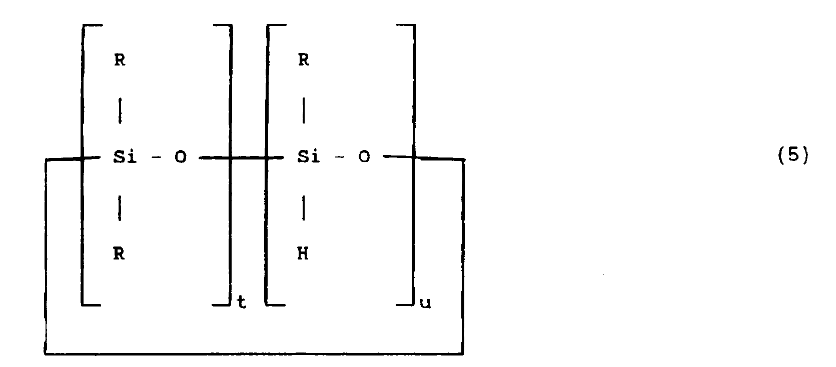 dans laquelle R, t et u ont la signification donnée dans la revendication 1 ou 2, sur un dérivé organique dibenzoylméthane choisi parmi ceux de formule : 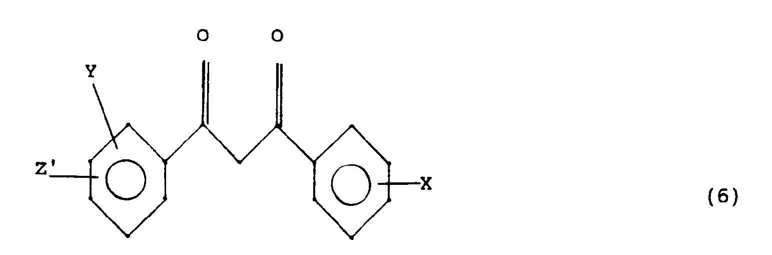 dans laquelle X et Y ont la signification donnée dans la revendication 1 ou 2 et Z′ représente le radical : 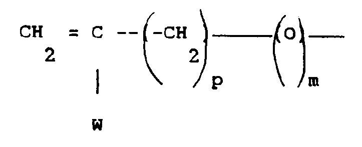 dans lequel p, m et W ont la signification donnée dans la revendication 1 ou 2, sous réserve que lorsque m est égal à 0, Y représente un radical OH ou alcoxy et est situé en position ortho par rapport à Z′.

## Revendications (Revendications pour l'(les) Etat(s) contractant(s) suivant(s): ES)

1. Procédé de préparation d'un polymère diorganopolysiloxane modifié choisi parmi ceux de formule : 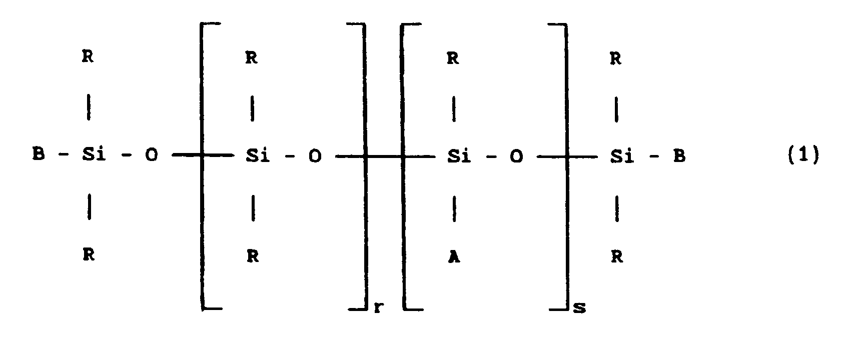 dans laquelle les symboles :
- R, identiques ou différents, sont choisis parmi les radicaux alkyle en C₁-C₁₀, vinyle, phényle et trifluoro-3,3,3 propyle, au noins 80 % en nombre des radicaux R étant méthyle,
- B, identiques ou différents, sont choisis parmi les radicals R et le radical A,
- r est un nombre entier choisi entre 0 et 200 inclusivenent,
- s est un nombre entier choisi entre 0 et 50 inclusivenent et si s est 0, au moins un des deux symboles B est A,
et de formule : 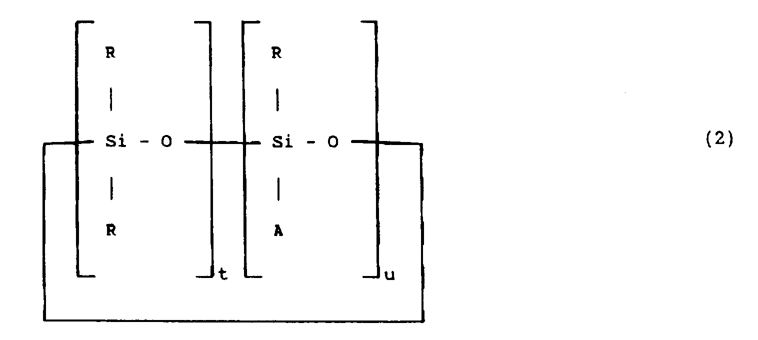 dans laquelle :
- R a la même signification qu'à la formule (1),
- u est un nombre entier compris entre 1 et 20 et
- t est un nombre entier compris entre 0 et 20 inclus,
- t + u est égal ou supérieur à 3,
formules dans lesquelles le symbole A est un radical de formule : 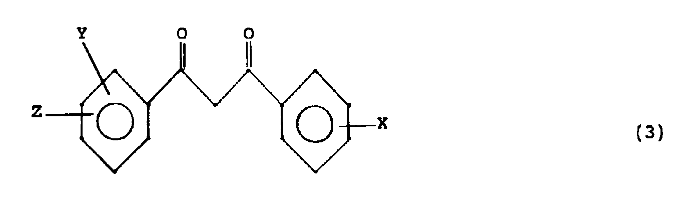 dans laquelle :
- X est choisi parmi un atome d'hydrogène, un radical alkyle linéaire ou ramifié en C₁-C₈, un radical alcoxy linéaire ou ramifié en C₁-C₈,
- Y est choisi parmi un atome d'hydrogène, un groupe hydroxyle et un radical alcoxy en C₁-C₄
- Z est un reste divalent de formule : 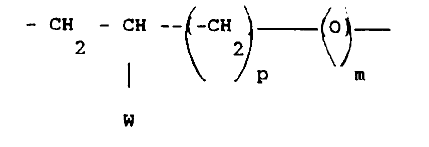 dans lequel m est 0 ou 1, p est un nombre entier compris entre 1 et 10 inclusivement et W est choisi parmi un atome d'hydrogène et un radical alkyle en C₁-C₄, sous réserve que, lorsque m est égal à 0, Y représente un radical alcoxy ou OH et est situé en position ortho par rapport à Z,
procédé caractérisé en ce qu'on effectue une réaction d'hydrosilylation en présence d'une quantité catalytiquement efficace d'un catalyseur au platine, d'un polymère à SiH de formule: 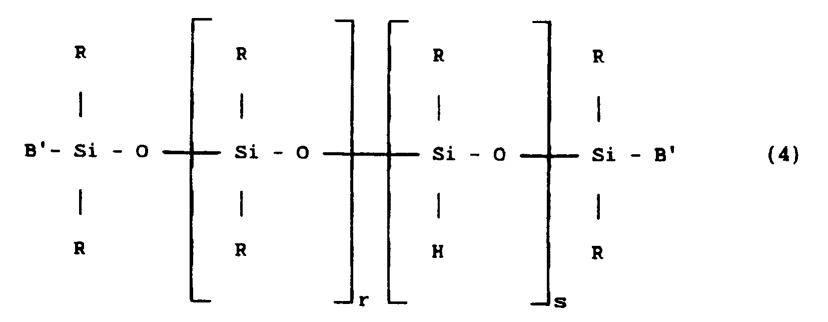 dans laquelle R, r et s ont la signification donnée ci-dessus pour la formule (1) et les radicaux B′, identiques ou différents, sont choisis parmi les radicaux R et un atome d'hydrogène,
et par la formule : 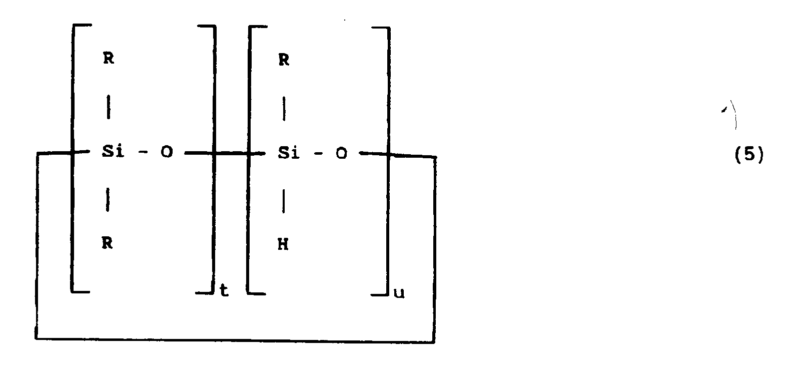 dans laquelle R, t et u ont la signification donnée ci-dessus pour la formule (2), sur un dérivé organique dibenzoylméthane choisi parmi ceux de formule : 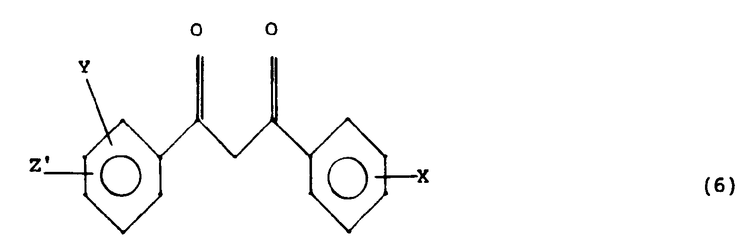 dans laquelle X et Y ont la signification donnée ci-dessus à la formule (3) et Z′ représente le radical : 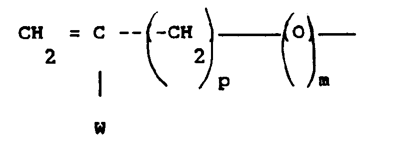 dans lequel p, m et W ont la signification donnée à la formule (3) ci-dessus, sous réserve que lorsque m est égal à 0, Y représente un radical OH ou alcoxy et est situé en position ortho par rapport à Z′.

2. Procédé selon la revendication 1, caractérisé en ce que :
- R est méthyle,
- B est méthyle,
- r est compris entre 5 et 20 inclus,
- s est compris entre 2 et 15 inclus,
- t + u est compris entre 3 et 10 inlcus,
- X est H ou méthoxy,
- Y est H, OH ou méthoxy,
- Z est un reste divalent dans lequel m = 0 ou 1, p = 1, W = H ou méthyle.

## Patentansprüche (Patentansprüche für folgende(n) Vertragsstaat(en): AT, BE, CH, DE, FR, GB, GR, IT, LI, LU, NL, SE)

1. Modifiziertes Diorganopolysiloxanpolymeres, ausgewählt unter denjenigen der Formel 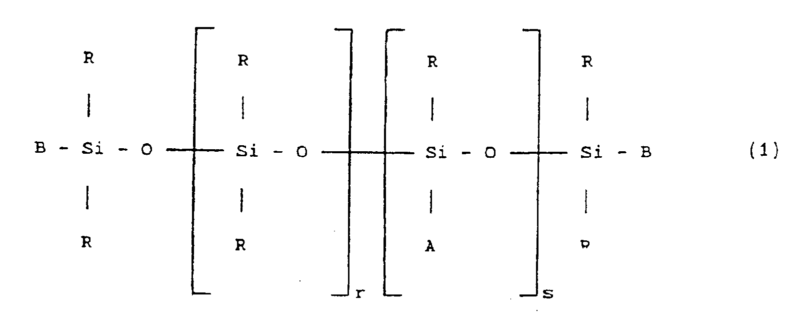 worin die Symbole
- R, die gleich oder voneinander verschieden sind, unter den C₁-C₁₀-Alkylresten, dem Vinyl-, Phenyl- und 3,3,3-Trifluorpropylrest ausgewählt sind, wobei zumindest 80 % der Anzahl der Reste R Methylreste sind,
- B, die gleich oder voneinander verschieden sind, unter den Resten R und dem Rest A ausgewählt sind,
- r eine ganze Zahl zwischen 0 und 200 einschließlich bedeutet,
- s eine ganze Zahl zwischen 0 und 50 einschließlich bedeutet, und wenn s für 0 steht, zumindest eines der beiden Symbole B für A steht, und der Formel 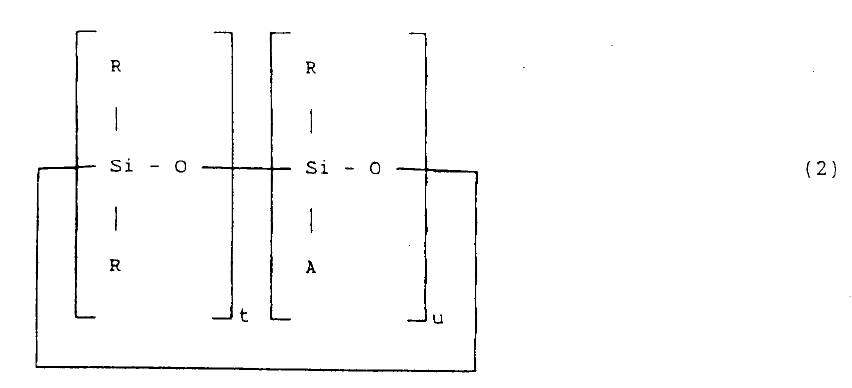
worin
- R die gleiche Bedeutung wie bei Formel (1) besitzt,
- u eine ganze Zahl zwischen 1 und 20 bedeutet und
- t eine ganze Zahl zwischen 0 und 20 einschließlich ist
- t + u gleich oder größer als 3 ist,
in welchen Formeln das Symbol A einen Rest der Formel 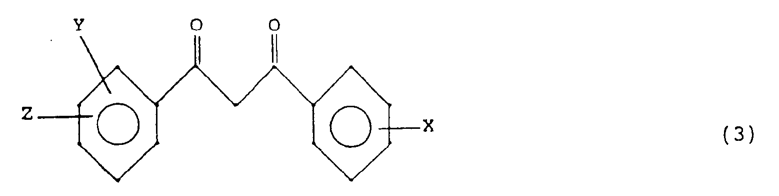 wiedergibt, worin
- X unter einem Wasserstoffatom, einem linearen oder verzweigten C₁-C₈-Alkylrest, einem linearen oder verzweigten C₁-C₈-Alkoxyrest ausgewählt ist,
- Y unter einem Wasserstoffatom, einer Hydroxylgruppe und einem C₁-C₄-Alkoxyrest ausgewählt ist,
- Z ein zweiwertiger Rest der Formel 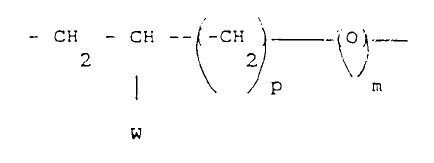 ist, worin m für 0 oder 1 steht, p eine ganze Zahl zwischen 1 und 10 einschließlich bedeutet, und W unter einem Wasserstoffatom und einem C₁-C₄-Alkylrest ausgewählt ist, mit der Maßgabe, daß, wenn m für 0 steht, Y einen Alkoxy- oder OH-Rest bedeutet und sich in ortho-Stellung in Bezug auf Z befindet.

2. Polymeres gemäß Anspruch 1, dadurch gekennzeichnet, daß
- R für Methyl steht,
- B für Methyl steht,
- r zwischen 5 und 20 einschließlich bedeutet,
- s zwischen 2 und 15 einschließlich bedeutet,
- t + u zwischen 3 und 10 einschließlich liegt,
- X für H oder Methoxy steht,
- Y für H, OH oder Methoxy steht,
- Z einen zweiwertigen Rest wiedergibt, worin m = 0 oder 1, p = 1, W = H oder Methyl.

3. Verfahren zur Herstellung eines Polymeren, wie in Anspruch 1 oder 2 definiert, dadurch gekennzeichnet, daß man in Anwesenheit einer katalytisch wirksamen Menge eines Platinkatalysators eine Hydrosilylierungsreaktion eines Polymeren mit SiH der Formel 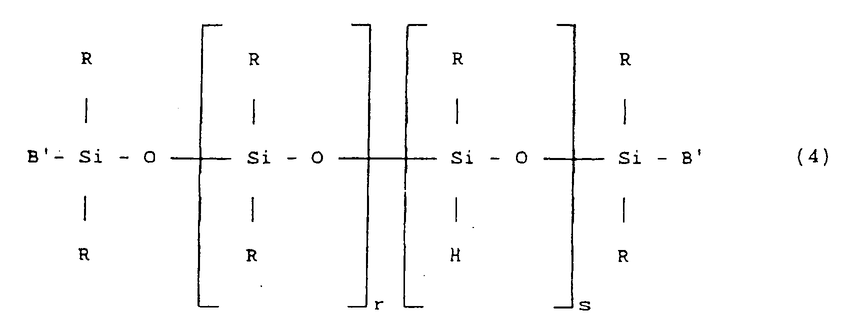 worin R, r und s die in Anspruch 1 oder 2 angegebene Bedeutung besitzen,
und die Reste B′, die gleich oder voneinander verschieden sind, unter den Resten R und einem Wasserstoffatom ausgewählt sind, und der Formel 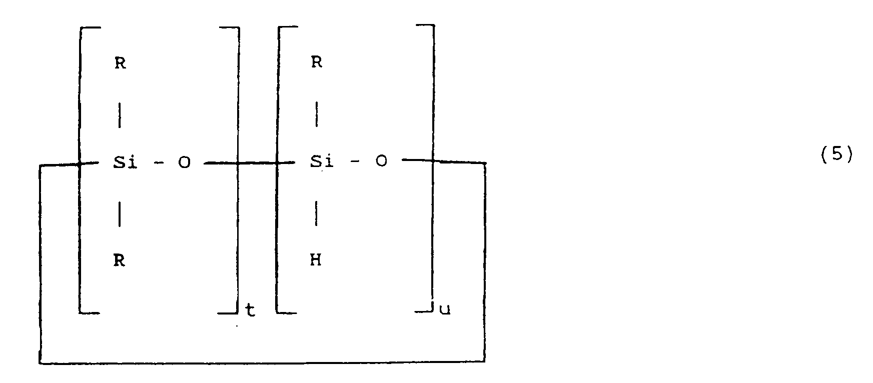 worin R, t und u die in Anspruch 1 oder 2 angegebene Bedeutung besitzen,
mit einem organischen Dibenzoylmethanderivat, ausgewählt unter denjenigen der Formel 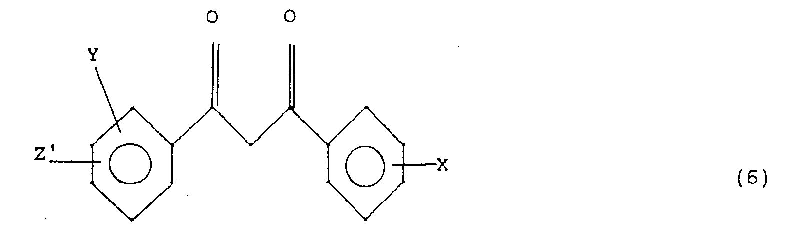 worin X und Y die in Anspruch 1 oder 2 angegebene Bedeutung besitzen, und Z′ den Rest 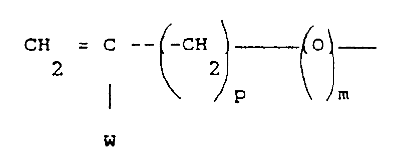 wiedergibt, worin p, m und W die in Anspruch 1 oder 2 angegebene Bedeutung besitzen, mit der Maßgabe, daß, wenn m für 0 steht, Y eine OH- oder Alkoxygruppe bedeutet, und sich in ortho-Stellung in Bezug auf Z′ befindet, durchführt.

## Patentansprüche (Patentansprüche für folgende(n) Vertragsstaat(en): ES)

1. Verfahren zur Herstellung eines modifizierten Diorganopolysiloxanpolymeren, ausgewählt unter denjenigen der Formel 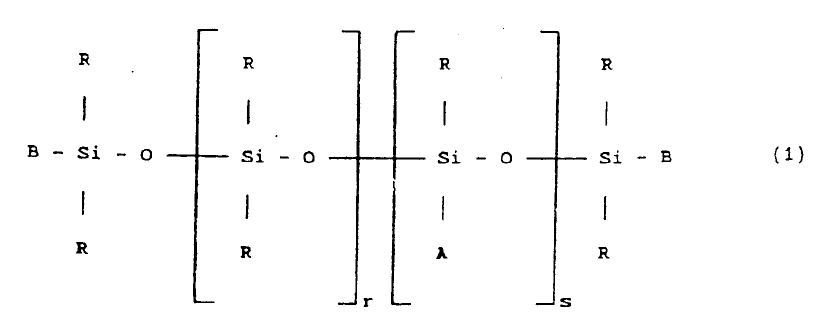 worin die Symbole
- R, die gleich oder voneinander verschieden sind, unter den C₁-C₁₀-Alkylresten, dem Vinyl-, Phenyl- und 3,3,3-Trifluorpropylrest ausgewählt sind, wobei zumindest 80 % der Anzahl der Reste R Methyl bedeutet,
- B, die gleich oder voneinander verschieden sind, unter den Resten R und dem Rest A ausgewählt sind,
- r eine ganze Zahl zwischen 0 und 200 einschließlich bedeutet,
- s eine ganze Zahl zwischen 0 und 50 einschließlich bedeutet, und wenn s für 0 steht, zumindest eines der beiden Symbole B für A steht, und der Formel 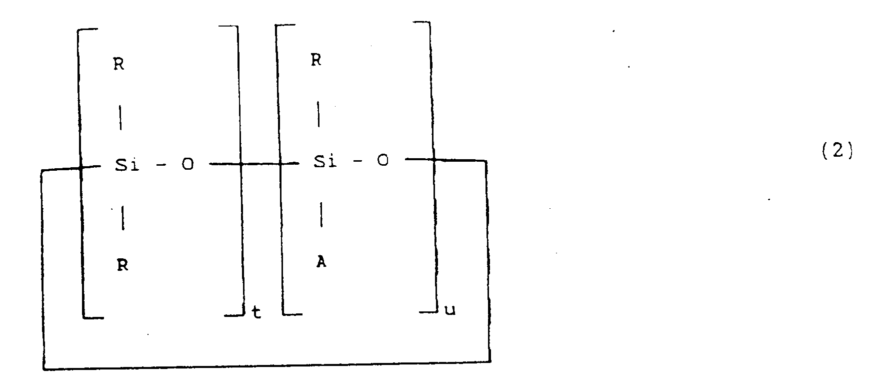
worin
- R die gleiche Bedeutung wie bei Formel (1) besitzt,
- u eine ganze Zahl zwischen 1 und 20 ist und
- t eine ganze Zahl zwischen 0 und 20 einschließlich ist,
- t + u gleich oder größer als 3 ist,
in welchen Formeln das Symbol A einen Rest der Formel 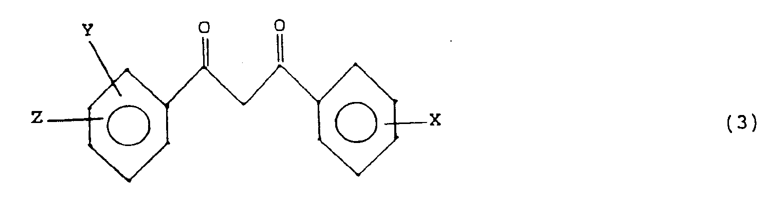 wiedergibt, worin
- X unter einem Wasserstoffatom, einem linearen oder verzweigten C₁-C₈-Alkylrest, einem linearen oder verzweigten C₁-C₈-Alkoxyrest ausgewählt ist,
- Y unter einem Wasserstoffatom, einer Hydroxylgruppe und einem C₁-C₄-Alkoxyrest ausgewählt ist,
- Z ein zweiwertiger Rest der Formel 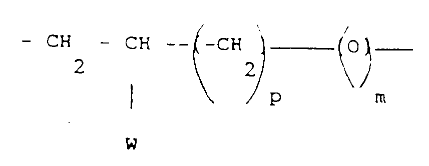 ist, worin m für 0 oder 1 steht, p eine ganze Zahl zwischen 1 und 10 einschließlich bedeutet und W unter einem Wasserstoffatom und einem C₁-C₄-Alkylrest ausgewählt ist, mit der Maßgabe, daß, wenn m für 0 steht, Y einen Alkoxy- oder OH-Rest bedeutet und sich in ortho-Stellung in Bezug auf Z befindet, dadurch gekennzeichnet, daß man in Anwesenheit einer katalytisch wirksamen Menge eines Platinkatalysators, eine Hydrosilylierungsreaktion eines Polymeren mit SiH der Formel 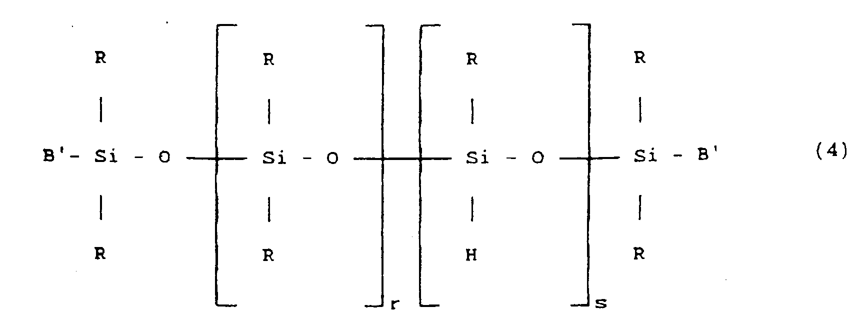 worin R, r und s die vorstehend für die Formel 1 angegebene Bedeutung besitzen, und die Reste B′, die gleich oder voneinander verschieden sind, unter den Resten R und einem Wasserstoffatom ausgewählt sind, und der Formel 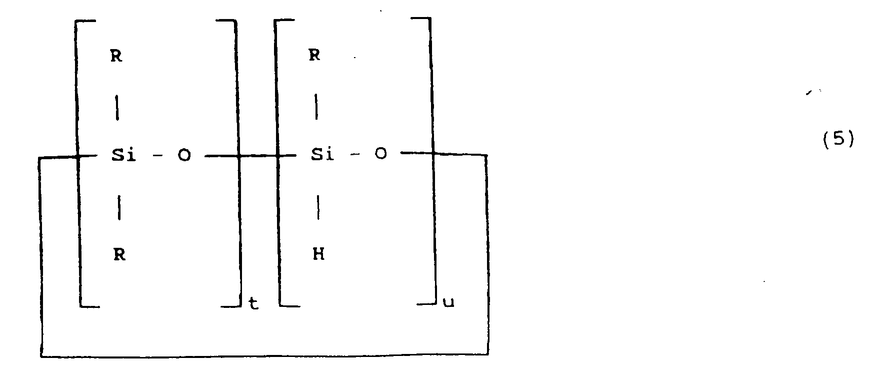 worin R, t und u die vorstehend für die Formel (2) angegebene Bedeutung besitzen, mit einem organischen Dibenzoylmethanderivat, ausgewählt unter denjenigen der Formel 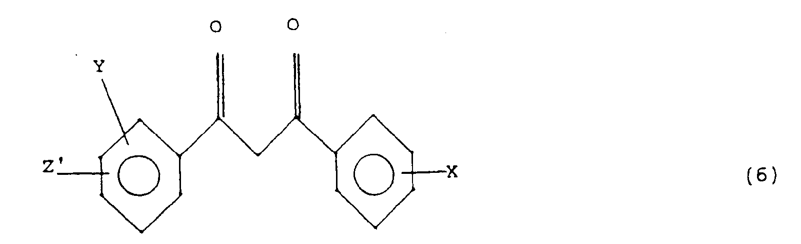 worin X und Y die vorstehend für die Formel (3) angegebene Bedeutung besitzen, und Z′ den Rest 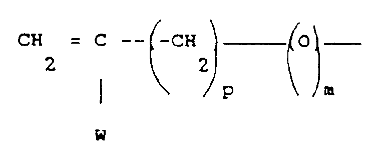 bedeutet, worin p, m und W die vorstehend bei Formel 3 angegebene Bedeutung besitzen, mit der Maßgabe, daß, wenn m für 0 steht, Y eine OH- oder Alkoxygruppe bedeutet und sich in ortho-Stellung in Bezug auf Z′ befindet, durchführt.

2. Verfahren gemäß Anspruch 1, dadurch gekennzeichnet, daß
- R für Methyl steht,
- B für Methyl steht,
- r zwischen 5 und 20 einschließlich bedeutet,
- s zwischen 2 und 15 einschließlich bedeutet,
- t + u zwischen 3 und 10 einschließlich liegt,
- X für H oder Methoxy steht,
- Y für H, OH oder Methoxy steht,
- Z einen zweiwertigen Rest wiedergibt, worin m = 0 oder 1, p = 1, W = H oder Methyl.

## Claims (Claims for the following Contracting State(s): AT, BE, CH, DE, FR, GB, GR, IT, LI, LU, NL, SE)

1. Modified diorganopolysiloxane polymer chosen from those of formula: 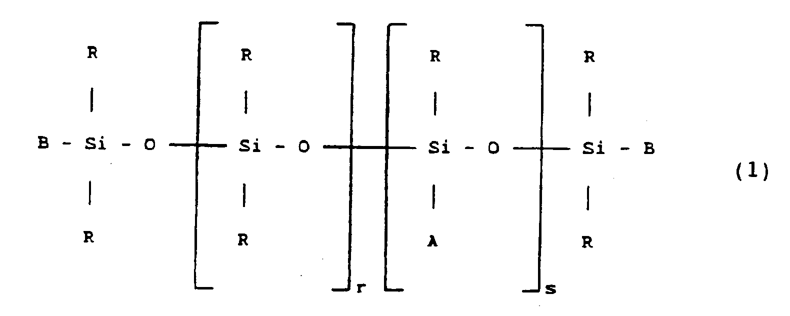 in which the symbols:
- R which are identical or different, are chosen from C₁-C₁₀ alkyl radicals, vinyl, phenyl and 3,3,3-trifluoropropyl radicals, at least 80 % of the number of the radicals R being methyl,
- B, which are identical or different, are chosen from the radicals R and the radical A,
- r is an integer chosen between 0 and 200 inclusive,
- s is an integer chosen between 0 and 50 inclusive and if s is 0, at least one of the two symbols B is A,
and of formula: 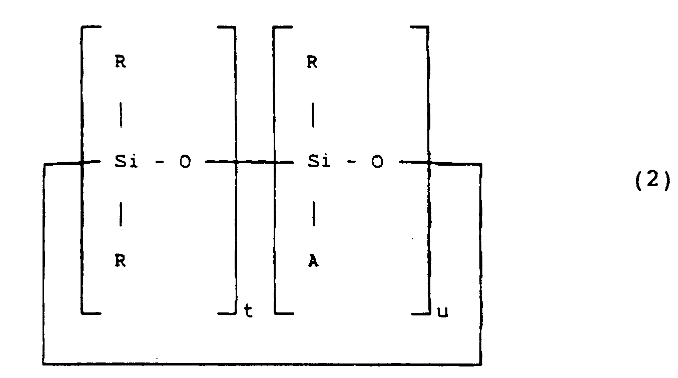 in which:
- R has the same meaning as in formula (1),
- u is an integer between 1 and 20 and
- t is an integer between 0 and 20 inclusive,
- t + u is equal to or greater than 3,
in which formulae the symbol A is a radical of formula: 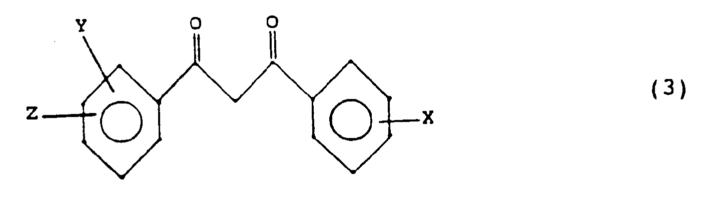 in which:
- X is chosen from a hydrogen atom, a linear or branched C₁-C₈ alkyl radical and a linear or branched C₁-C₈ alkoxy radical,
- Y is chosen from a hydrogen atom, a hydroxyl group and a C₁-C₄ alkoxy radical,
- Z is a divalent residue of formula: 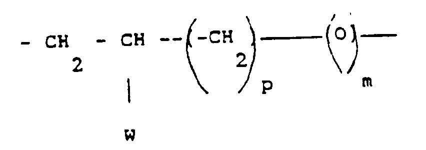 in which m is 0 or 1, p is an integer between 1 and 10 inclusive and W is chosen from a hydrogen atom and a C₁-C₄ alkyl radical, provided that, when m is equal to 0, Y denotes an alkoxy radical or OH and is situated in an ortho position in relation to Z.

2. Polymer according to Claim 1, characterised in that:
- R is methyl,
- B is methyl,
- r is between 5 and 20 inclusive,
- s is between 2 and 15 inclusive,
- t + u is between 3 and 10 inclusive,
- X is H or methoxy,
- Y is H, OH or methoxy,
- Z is a divalent residue in which m = 0 or 1, p = 1, W = H or methyl.

3. Process for the preparation of a polymer as defined in Claim 1 or 2, characterised in that a hydrosilylation reaction is performed, in the presence of a catalytically effective quantity of a platinum catalyst, of a polymer containing SiH, of formula: 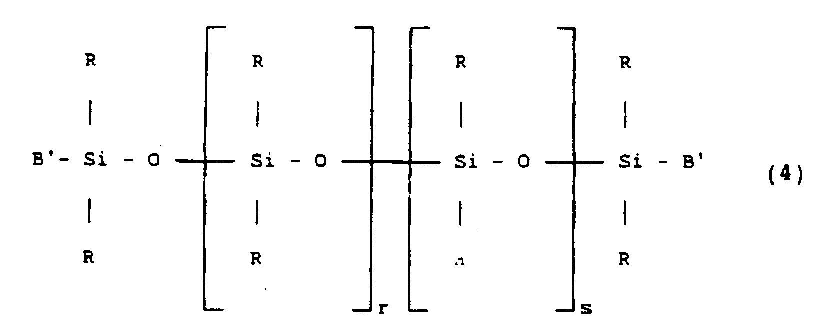 in which R, r and s have the meaning given in Claim 1 or 2
and the radicals B′, which are identical or different, are chosen from the radicals R and a hydrogen atom,
and by the formula: 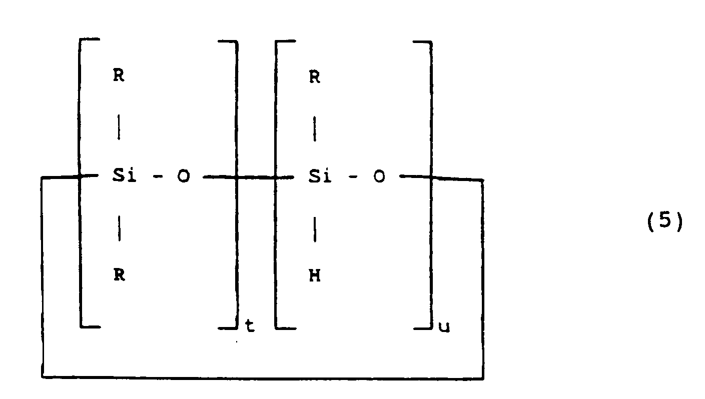 in which R, t and u have the meaning given in Claim 1 or 2,
with an organic dibenzoylmethane derivative chosen from those of formula: 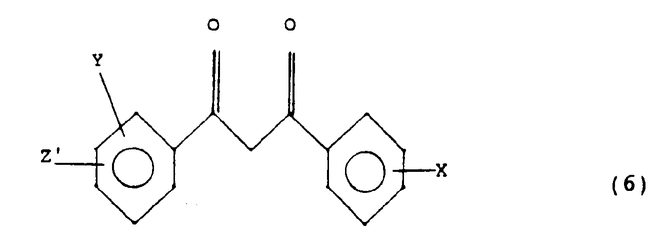 in which X and Y have the meaning given in Claim 1 or 2 and Z′ denotes the radical: 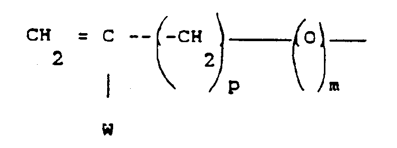 in which p, m and W have the meaning given in Claim 1 or 2,
provided that when m is equal to 0, Y denotes an OH or alkoxy radical and is situated in an ortho position in relation to Z′.

## Claims (Claims for the following Contracting State(s): ES)

1. Process for the preparation of a modified diorganopolysiloxane polymer chosen from those of formula: 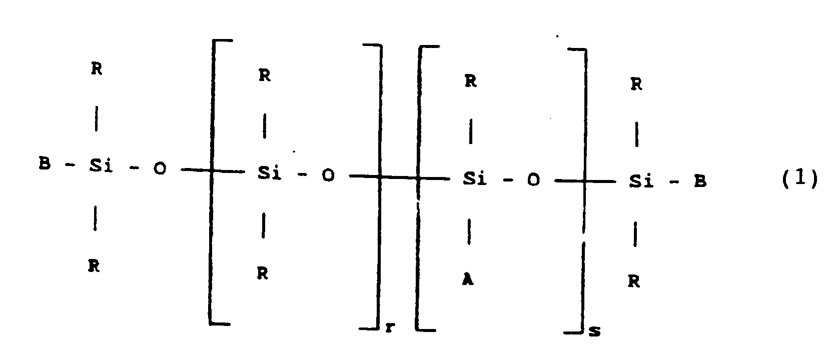 in which the symbols:
- R which are identical or different, are chosen from C₁-C₁₀ alkyl radicals, vinyl, phenyl and 3,3,3-trifluoropropyl radicals, at least 80 % of the number of the radicals R being methyl,
- B, which are identical or different, are chosen from the radicals R and the radical A,
- r is an integer chosen between 0 and 200 inclusive,
- s is an integer chosen between 0 and 50 inclusive and if s is 0, at least one of the two symbols B is A,
and of formula: 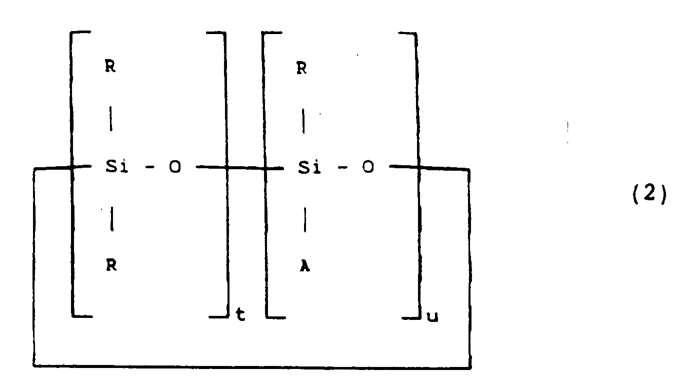 in which:
- R has the same meaning as in formula (1),
- u is an integer between 1 and 20 and
- t is an integer between 0 and 20 inclusive,
- t + u is equal to or greater than 3,
in which formulae the symbol A is a radical of formula: 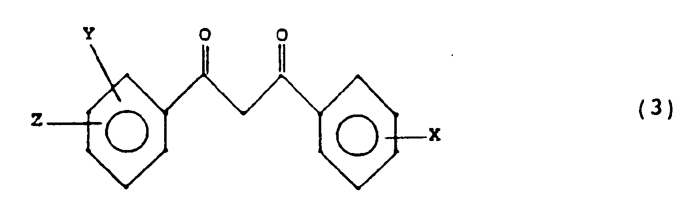 in which:
- X is chosen from a hydrogen atom, a linear or branched C₁-C₈ alkyl radical and a linear or branched C₁-C₈ alkoxy radical,
- Y is chosen from a hydrogen atom, a hydroxyl group and a C₁-C₄ alkoxy radical,
- Z is a divalent residue of formula: 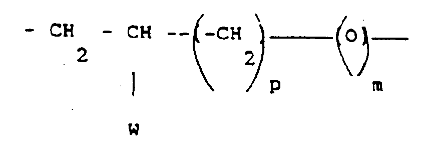 in which m is 0 or 1, p is an integer between 1 and 10 inclusive and W is chosen from a hydrogen atom and a C₁-C₄ alkyl radical, provided that, when m is equal to 0, Y denotes an alkoxy radical or OH and is situated in an ortho position in relation to Z,
process characterised in that a hydrosilylation reaction is performed, in the presence of a catalytically effective quantity of a platinum catalyst, of a polymer containing SiH, of formula: 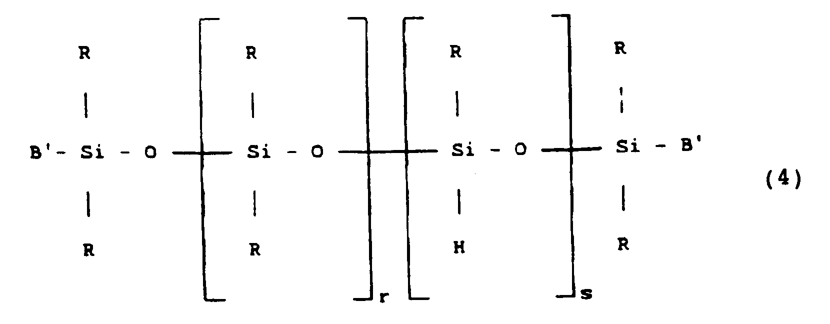 in which R, r and s have the meaning given above for formula (1) and the radicals B′, which are identical or different, are chosen from the radicals R and a hydrogen atom,
and by the formula: 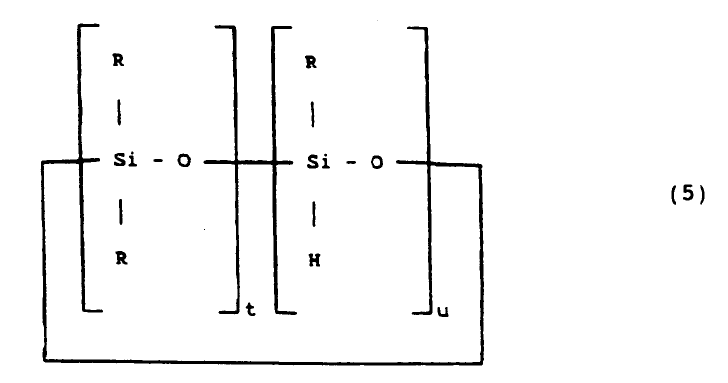 in which R, t and u have the meaning given above for the formula (2), with an organic dibenzoylmethane derivative chosen from those of formula: 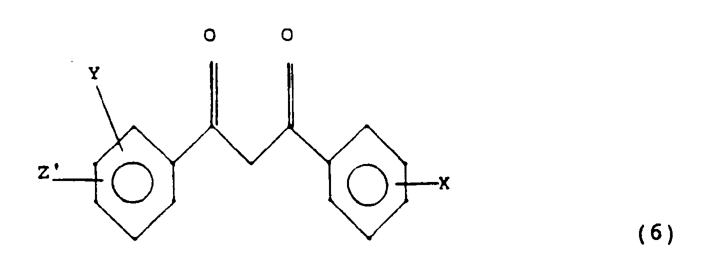 in which X and Y have the meaning given above in formula (3) and Z′ denotes the radical: 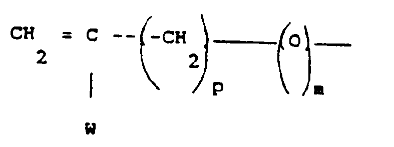 in which p, m and W have the meaning given in formula (3) above, provided that when m is equal to 0, Y denotes an OH or alkoxy radical and is situated in an ortho position in relation to Z′.

2. Process according to Claim 1, characterised in that:
- R is methyl,
- B is methyl,
- r is between 5 and 20 inclusive,
- s is between 2 and 15 inclusive,
- t + u is between 3 and 10 inclusive,
- X is H or methoxy,
- Y is H, OH or methoxy,
- Z is a divalent residue in which m = 0 or 1, p = 1, W = H or methyl.
